# EUROPÄISCHE PATENTSCHRIFT

(11) **EP 3 529 576 B1**
(45) Veröffentlichungstag und Bekanntmachung des Hinweises auf die Patenterteilung: **27.09.2023**
(21) Anmeldenummer: 17778289.3
(22) Anmeldetag: 04.10.2017
(51) Int. Cl.: G01K 1/14, G01K 13/02, F16H 59/72

(54) **TEMPERATURSENSOR, SENSORVORRICHTUNG UND SCHALTGETRIEBE FÜR NUTZFAHRZEUGE**
TEMPERATURE SENSOR, SENSOR DEVICE, AND GEARBOX FOR COMMERCIAL VEHICLES
CAPTEUR DE TEMPÉRATURE, DISPOSITIF DE DÉTECTEUR ET BOÎTE DE VITESSES MANUELLE DE VÉHICULES UTILITAIRES

(30) Priorität: 18.10.2016 DE 102016119764
(43) Veröffentlichungstag der Anmeldung: 28.08.2019
(73) Patentinhaber: KNORR-BREMSE Systeme für Nutzfahrzeuge GmbH, 80809 München (DE)
(72) Erfinder: HUBER, Christian, 80937 München (DE); FISCHER, Uwe, 71409 Schwaikheim (DE)
(74) Vertreter: LifeTech IP Spies & Behrndt Patentanwälte PartG mbB
(86) Internationale Anmeldenummer: PCT/EP2017/075187
(87) Internationale Veröffentlichungsnummer: WO 2018/073002

(56) Entgegenhaltungen:
- EP-A2- 0 797 028
- DE-A1- 19 915 471
- DE-A1-102009 014 735
- US-A- 5 473 937
- US-A1- 2012 201 269

## Beschreibung

Die vorliegende Erfindung bezieht sich auf einen Temperatursensor, eine Sensorvorrichtung und ein Schaltgetriebe für Nutzfahrzeuge und insbesondere auf einen Temperatursensor mit integrierter Auswertung zur Verbesserung der Genauigkeit und Diagnosefähigkeit.

Im Nutzfahrzeugbau (z.B. für Nutzfahrzeuge im Nah- und Fernverkehr, Verteilerverkehr, sowie für Überland- und Reisebusverkehr) besitzen Schaltgetriebe häufig eine Vielzahl von Gangstufen, die in Gruppenbauweise hergestellt werden. Dieser Aufbau wird bei Nutzfahrzeugen zunehmend für automatisierte Schaltgetriebe verwendet, wobei prinzipiell unterschiedliche Automatisierungsgrade vorkommen können. Je nach Ausführung kann dabei der Anfahrvorgang, die Betätigung der Schaltkupplung sowie die Gangwahl automatisch erfolgen. Bei Handschaltgetrieben ist keiner dieser Vorgänge automatisiert, bei teilautomatisierten Schaltgetrieben ist zumindest einer dieser Vorgänge automatisiert und bei vollautomatischen Schaltbetrieben erfolgen alle Vorgänge automatisiert.

Angepasste Betätigungseinrichtungen können für eine automatisierte Anfahrkupplung, ein automatisiertes Kuppeln beim Schalten sowie eine automatisierte Gangwahl bei einem Motormanagement genutzt werden. Für die Schaltautomatisierung ist es wichtig, möglichst genau Positionen von Schaltelementen zu erfassen, um dadurch automatisierte Schaltabläufe weiter optimieren und die Effizienz steigern zu können. Außerdem ist es für eine ordnungsgemäße Durchführung eines Schaltvorganges in dem Getriebe wichtig, die Temperatur zuverlässig zu erfassen. Abgesehen von temperaturbedingten Ausdehnungen ist auch die Konsistenz eines Getriebeöls abhängig von der Temperatur. Die Getriebesteuerung kann diese Daten entsprechend berücksichtigen und kann eine erfasste Stellung eines Stellgliedes in Abhängigkeit von der Temperatur entsprechend berücksichtigen oder unterschiedlich bewerten.

Daher ist eine Temperaturmessung eines Ölraumes innerhalb des Schaltgetriebes durchzuführen, um den Schaltablauf unabhängig von der Temperatur des Getriebes ausführen zu können und um so die Kräfte zum Einlegen verschiedener Gänge entsprechend anpassen zu können. Weiterhin ist eine Temperaturinformation wünschenswert, um eine drohende Überhitzung des Getriebes rechtzeitig zu erkennen und entsprechende Gegenmaßnahmen einleiten zu können. Diese Gegenmaßnahmen können beispielsweise eine andere Gangwahl, ein Notlaufprogramm, eine Leistungsbegrenzung oder andere Maßnahmen umfassen, die eine Absenkung der Temperatur im Ölraum bewirken können.

EP 0 797 028 A2 offenbart einen konventionellen Temperatursensor für einen Geschwindigkeitsreduzierer. Außerdem offenbart DE 10 2009 014 735 A1 ein weiteres konventionelles System und Verfahren zum Messen von Getriebeöl. US 2012 02 01 269 A1 offenbart einen Temperatursensor zur Erfassung der Temperatur von Flüssigkeiten wie, zum Beispiel, Schmiermitteln, Kraftstoff und Kühlmitteln, die in einem Motor fließen.

Da bekannte Temperatursensoren ungenau, fehleranfällig und unzuverlässig sind, besteht ein Bedarf nach einer verbesserten Temperatursensierung.

Zumindest einige der oben genannten Probleme werden durch einen Temperatursensor nach Anspruch 1, eine Sensorvorrichtung nach Anspruch 7, ein Schaltgetriebe nach Anspruch 10 und ein Nutzfahrzeug nach Anspruch 11 gelöst. Die abhängigen Ansprüche definieren weitere vorteilhafte Ausführungsformen.

Die vorliegende Erfindung bezieht sich auf einen Temperatursensor gemäß Anspruch 1.

Bei weiteren Ausführungsbeispielen ist die Auswerteeinheit ausgebildet, um das erfasste Sensorsignal in ein digitales Messsignal umzuwandeln und die Datenschnittstelle ist ausgebildet, um das digitale Messsignal auszugeben. Optional kann die Auswerteeinheit ebenfalls ausgebildet sein, anstatt oder zusätzlich zu dem digitalen Messsignal ein analoges Messsignal auszugeben. Das analoge Messsignal kann beispielsweise einen Spannungswert oder Stromwert umfassen, der sich in Abhängigkeit von der zu erfassenden Temperatur ändert. Dieses analoge Messsignal kann abgetastet und in ein digitales Signal umgewandelt werden. Ein Vorteil von digitalen Messsignalen besteht darin, dass dadurch die Störanfälligkeit verringert werden kann. Störungen von digitalen Signalen verfälschen das Ergebnis nicht, zumindest solange die Störungen das digitale Signal nicht unkenntlich machen. Im Gegensatz hierzu wird ein analoges Signal bei auftretenden Störungen (z.B. elektromagnetische Störsignale von anderen Fahrzeugteilen) verfälscht. Diese Verfälschung wird unter Umständen nicht erkannt und führt dann zu nicht gewünschten Reaktionen der Getriebesteuerung.

Erfindungsgemäß ist die Auswerteinheit ausgebildet, um basierend auf einer Kalibrierung (d.h. von Kalibrierungsdaten) das erfasste Sensorsignal in ein Temperatursignal umzuwandeln. Die Kalibrierung kann beispielsweise über die Datenschnittstelle abrufbar sein. Bei der Kalibrierung erfolgt eine Zuweisung eines Temperaturwertes zu einem erfassten Sensorsignalwert. Beispielsweise kann das erfasste Sensorsignal einen Spannungs- oder Stromwert (oder Widerstandswert) umfassen, dem durch die Kalibrierung ein bestimmter Temperaturwert zugewiesen wird. Diese Zuweisung kann beispielsweise durch eine Tabelle oder einen funktionalen Zusammenhang gegeben sein. Die so erhaltene Kalibrierung kann einerseits über die Datenschnittstelle von einer anderen Steuereinheit oder einem Datenspeicher innerhalb des Fahrzeuges abgerufen werden oder optional in einem Datenspeicher innerhalb des Temperatursensors abgespeichert werden, von wo die Auswerteeinheit sie bekommen kann.

Daher kann der Temperatursensor einen optionalen Datenspeicher zum Speichern und Bereitstellen der Kalibrierung (und optional weiterer Daten oder Ergebnisse) aufweisen.

Optional kann der Temperatursensor außerdem zumindest ein Dichtelement aufweisen, das ausgebildet ist, um eine Dichtung für Öl des Schaltgetriebes bereitzustellen. Der Temperatursensor kann außerdem Befestigungsmittel aufweisen, um den Temperatursensor in thermischen Kontakt zu dem Innenraum des Schaltgetriebes zu befestigen (z.B. an ein Gehäuse des Schaltgetriebes).

Bei einem Material mit einem negativen Temperaturkoeffizienten fällt der elektrische Widerstand mit zunehmender Temperatur ab. Daher ist bei diesem Material mit dem Erreichen der Betriebstemperatur ein geringerer Widerstandswert zu erwarten als davor. Wenn jedoch wider Erwarten ein hoher Widerstandswert auftritt, kann dies auf einen Leitungsschaden oder eine Signalunterbrechung hindeuten. Ein Vorteil von Materialien mit einem positiven Temperaturkoeffizienten besteht umgekehrt darin, dass ein Fehler, beispielsweise beim Starten des Fahrzeuges, detektiert werden kann, da ein Material mit einem positiven Temperaturkoeffizienten bei niedrigen Temperaturen niederohmig ist und mit steigender Temperatur hochohmig wird. Falls also der erfasste Widerstandswert unerwarteterweise einen hohen Wert anzeigt, wenn ein geringer Widerstandswert zu erwarten gewesen wäre, dann deutet dies auf einen Fehler hin (z.B. einen Leitungsbruch). Diese Detektion kann beispielsweise durch die Auswerteeinheit ausgeführt werden und ein entsprechendes Detektionssignal kann an eine Steuereinheit über die Schnittstelle ausgegeben werden.

Optional kann die Datenschnittstelle ausgebildet sein, um direkt an einen Fahrzeugbus des Nutzfahrzeuges zu koppeln oder das ausgewertete Sensorsignal drahtlos an eine Steuereinheit des Nutzfahrzeuges zu übertragen. Insbesondere können digitale Signale, wenn sie durch die Auswerteeinheit aus den erfassten Sensorsignalen entsprechend erzeugt werden, direkt an einen Fahrzeugbus ausgegeben werden und/oder anderen Steuereinheiten (z.B. der Getriebesteuerung) verfügbar gemacht werden.

Die vorliegende Erfindung bezieht sich auch auf eine Sensorvorrichtung für ein Schaltgetriebe eines Nutzfahrzeuges, wobei die Sensorvorrichtung einen zuvor beschriebenen Temperatursensor (und optional weitere Sensoren) und eine Verschaltung zum Verbinden des Temperatursensors mit weiteren Bauelementen aufweist. Die Verschaltung umfasst ein Stanzgitter. Die weiteren Bauelemente können beispielsweise zumindest eines der folgenden Bauteile umfassen: eine Einrichtung zur elektromagnetischen Verträglichkeit (EMV), eine Spannungsstabilisierungseinrichtung, eine Schutzbeschaltung, eine weitere Steuereinheit.

Die vorliegende Erfindung bezieht sich auch auf ein Schaltgetriebe für ein Nutzfahrzeug, wobei das Schaltgetriebe die zuvor beschriebene Steuervorrichtung und/oder den zuvor beschriebenen Temperatursensor aufweist. Außerdem bezieht sich die Erfindung auf ein Nutzfahrzeug mit dem Schaltgetriebe oder dem Temperatursensor.

Ausführungsbeispiele der vorliegenden Erfindung lösen die obengenannte technische Aufgabe durch eine Verwendung eines Temperatursensors mit einer integrierten Auswertung, wodurch eine erhöhte Genauigkeit bei der Temperaturmessung ermöglicht wird und darüber hinaus eine Diagnosefähigkeit deutlich verbessert wird. Zum Beispiel kann die integrierte Auswerteeinheit einen Fehler (z.B. einen Leitungsbruch) in dem Sensorelement feststellen.

Die Ausführungsbeispiele der vorliegenden Erfindung werden besser verstanden von der folgenden detaillierten Beschreibung und den beiliegenden Zeichnungen der unterschiedlichen Ausführungsbeispiele, die jedoch nicht so verstanden werden sollten, dass sie die Offenbarung auf die spezifischen Ausführungsformen einschränkt, sondern lediglich der Erklärung und dem Verständnis dienen.
- Fig. 1: zeigt einen Temperatursensor gemäß einem Ausführungsbeispiel der vorliegenden Erfindung.
- Fig. 2: veranschaulicht einen Signalfluss der erfassten Temperaturwerte gemäß weiterer Ausführungsbeispiele.

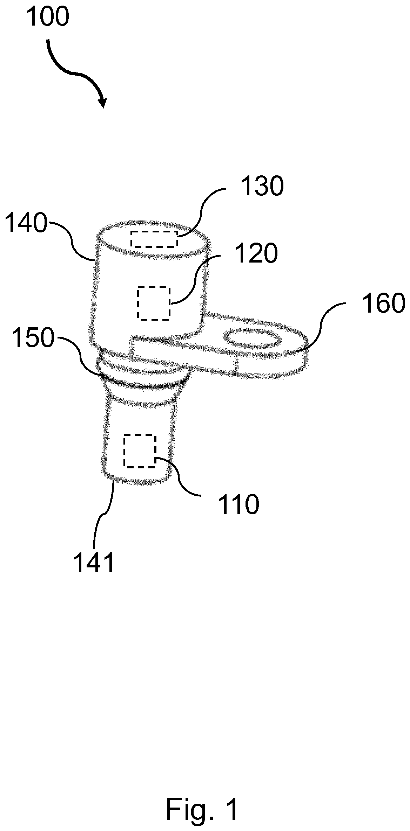

**Fig. 1** zeigt einen Temperatursensor 100, der geeignet ist, um eine Temperatur in einem Innenraum eines Schaltgetriebes eines Nutzfahrzeuges zu ermitteln. Der Temperatursensor 100 umfasst ein Sensorelement 110, eine Auswerteeinheit 120, eine Datenschnittstelle 130 und ein Gehäuse 140. Das Sensorelement 110 ist ausgebildet, um Sensorsignale zu erzeugen, wobei die Sensorsignale von der Temperatur in dem Innenraum abhängen, sodass über eine Kalibrierung eine Bestimmung der Temperatur möglich ist. Die Auswerteeinheit 120 ist ausgebildet, um die erfassten Sensorsignal auszuwerten, und die Datenschnittstelle ist ausgebildet, um die ausgewerteten Sensorsignale bereitzustellen (z.B. direkt weiterzuleiten oder auf Abruf zur Verfügung zu stellen). Das Gehäuse 140 ist ausgebildet, um die Sensoreinheit 110, die Auswerteeinheit 120 und die Datenschnittstelle 130 derart aufzunehmen, dass das Sensorelement 110 in thermischen Kontakt zu dem Innenraum des Schaltgetriebes platzierbar ist.

Außerdem umfasst der Temperatursensor 100 optional zumindest ein Dichtelement 150 und Befestigungsmittel 160. Das Dichtelement 150 ist ausgebildet, um eine beispielhafte Öl-Dichtung für das Öl in dem Schaltgetriebe bereitzustellen. Das Befestigungsmittel 160 ist beispielsweise ausgebildet, um den Temperatursensor 100 in einem thermischen Kontakt zu dem Innenraum des Schaltgetriebes zu befestigen. Das Befestigungsmittel 160 kann dabei jedes Mittel sein, welches geeignet ist, um einen festen Sitz des Temperatursensors 100 an einer gewünschten Stelle des Schaltgetriebes zu bewirken (z.B. eine Schraubverbindung, eine Klemmverbindung, eine Nietverbindung und anderes mehr).

Das Dichtelement 150 kann beispielsweise derart ausgebildet sein, dass es in einer Öffnung des Schaltgetriebegehäuses eingesetzt werden kann. Es kann beispielsweise einen Dichtring aufweisen, um nach der Befestigung des Temperatursensors 100 an dem beispielhaften Schaltgetriebegehäuse eine dichte Verbindung zwischen dem Temperatursensor 100 und dem Schaltgetriebegehäuse herzustellen.

Das Gehäuse 140 umfasst einen untere Abschnitt 141, in welchem das Sensorelement 110 beispielhaft untergebracht ist und welches eine Form hat, um sich zumindest teilweise in den Innenraum des Schaltgetriebegehäuses hinein zu erstrecken. Dadurch kann ein thermischer Kontakt zu dem Innenraum sichergestellt werden. Optional kann das Sensorelement 110 in direktem Kontakt zu dem unteren Gehäuseabschnitt 141 stehen, der am weitesten in dem Innenraum des Schaltgetriebes hinein ragt. Das Sensorelement 110 kann jedoch ebenfalls eine thermische Strahlung des Abschnittes 141 erfassen, so dass es nicht in direktem Kontakt zu dem Abschnitt 141 angeordnet sein muss.

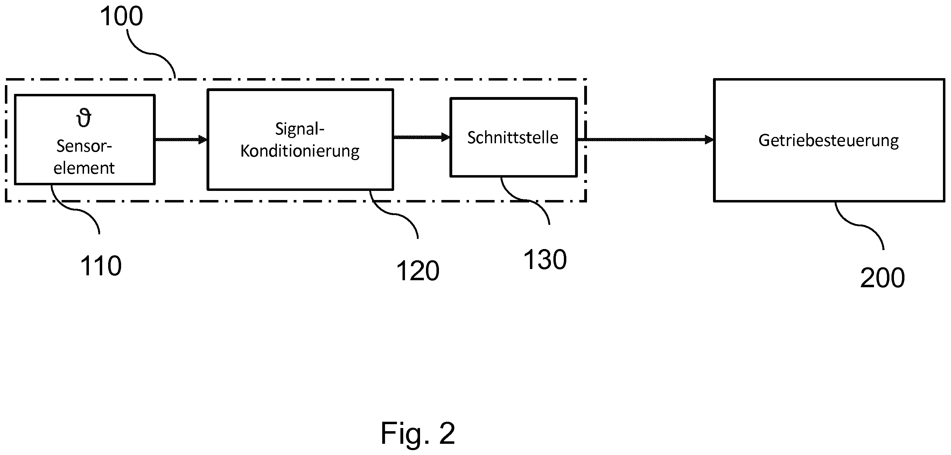

**Fig. 2** veranschaulicht einen Signalfluss der erfassten Temperaturwerte. In dem schematisch gezeigten Temperatursensor 100 ist wiederum ein Sensorelement 110, eine Auswerteeinheit 120 und eine Schnittstelle 130 untergebracht. Das Sensorelement 110 erfasst die Temperatur *ϑ*, beispielsweise in Form eines elektrischen Sensorsignals, welches an die Auswerteeinheit 120 weitergegeben wird.

Die Auswerteeinheit 120 führt beispielhaft eine Signalkonditionierung durch. Im Rahmen dieser Signalkonditionierung kann basierend auf dem von dem Sensorelement 110 erfassten Sensorsignal optional ein digitales (oder auch analoges) Messsignal erzeugt werden. Optional kann dabei direkt ein Temperaturwert dem erfassten Sensorsignal zugeordnet werden, so dass dieser Temperaturwert direkt (z.B. in Form eines digitalen Signals) ausgegeben wird. Beispielsweise ist es möglich, dass mit einer bestimmten Anzahl von Bits erfasste Temperaturwerte kodiert werden können. So können beispielsweise durch die Ausgabe eines 8-Bit-Wertes 256 Temperaturwerte kodiert werden oder durch Ausgabe eines 7-Bit-Wertes 128 Temperaturwerte. Es versteht sich, dass dies nur Beispiele sind und andere digitale Kodierungen ebenfalls möglich sind.

Optional ist es ebenfalls möglich, die Temperatur nicht genau zu bestimmen, sondern nur Bereiche zu definieren, in denen sich der erfasste Temperaturwert momentan befindet. Da Gegenmaßnahmen häufig nur dann einzuleiten sind, wenn bestimmte Temperatur-Schwellenwert überschritten werden, kann hierdurch das übertragene Datenvolumen verringert werden, ohne dass eine optimale Arbeitsweise gefährdet wird.

Die Schnittstelle 130 kann den durch die Auswerteeinheit 120 erzeugten Temperaturwert oder das entsprechende Ausgabesignal aus dem Temperatursensor 100 ausgeben und beispielsweise an einer Getriebesteuerung 200 übermitteln. Dazu kann beispielhaft die Schnittstelle 130 den durch die Auswerteeinheit 120 ermittelten Temperaturwert direkt über einen Datenbus an die Getriebesteuerung 200 senden. Beispielsweise können so durch eine Abfolge von Bit-Sequenzen permanent Temperaturwerte von dem Temperatursensor 100 an die beispielhafte Getriebesteuerung 200 übermittelt werden. Zum Beispiel können durch eine Abfolge von 4-Bit-Werten ein vorliegender Temperaturbereich (von 16 möglichen Temperaturbereiche) fortlaufend über einen Datenstrom an die Getriebesteuerung 200 übermittelt werden.

Die Getriebesteuerung 200 kann basierend auf den übertragenen Temperaturbereich, Aktionen durchführen. Diese Aktionen können beispielsweise die folgenden Tätigkeiten umfassen: Anpassung der Kräfte zum Einlegen verschiedener Gänge, Auswahl eines anderen Ganges, Auslösen eines Notlaufprogrammes, Begrenzung einer Leistung oder andere Maßnahmen umfassen, die eine Absenkung der Temperatur im Ölraum bewirken können. Ein Vorteil der Nutzung von digitalen Temperaturwerten besteht wie bereits dargelegt darin, dass eine Verfügbarkeit und eine Zuverlässigkeit verbessert wird. Außerdem wird die Temperaturerfassung dadurch weniger störanfällig, da einmal erzeugte digitale Werte nicht so leicht gestört werden wie analoge Spannungswerte, die bei Störungen sofort zu Verfälschungen führen.

Erfindugsgemäß weist das Sensorelement 110 ein Material mit einem negativen Temperaturkoeffizienten (NTC = negative temperature coefficient; engl.) auf, um die Temperatur über eine Widerstandsänderung zu ermitteln. Ein Vorteil dieser Materialien besteht darin, dass sie es erlauben, einen Leitungsschaden oder eine Unterbrechung des Signalweges festzustellen, da die Materialien bei hohen Temperatur (z.B. Erreichen der Betriebstemperatur) niederohmig sind und ein unerwartet hoher Widerstandswert auf einen Fehler hindeuten würde. Erfindungsgemäß wird festgestellter unerwarteter Widerstandswert für die Detektion eines Fehlers genutzt werden. Es versteht sich, dass eine solche Diagnosefunktion erst bei einem Überschreiten eines Schwellenwertes, der ein Verlassen des normalen Betriebsbereiches andeutet, eindeutige Resultate liefert.

Optional ist es ebenfalls möglich, dass die Schnittstelle 130 über eine Funkverbindung mit den weiteren Bauelementen verbunden ist. Das Ausgangssignal, welches über die Schnittstelle 130 ausgegeben wird kann daher drahtlos oder drahtgebunden ausgegeben werden. Wenn es als analoges Signal ausgegeben wird, kann es beispielhaft einen Spannungswert zwischen 0 und 5 V (oder maximal +/- 10 V betragen) umfassen. Vorteilhaft ist jedoch die Ausgabe eines digitalen Messsignals, welches in Form einer bestimmten Sequenz von Pulsen (Pulszahl) ausgegeben wird, z. B. unter Nutzung des SENT-Protokolls (SENT = Single Edge Nibble Transmission) oder unter Nutzung zumindest einer der folgenden Schnittstellen/Kodes: SPI (Serial Peripheral Interface; engl.), CAN (Controller Area Network; engl.), UART (Universal Asynchronous Receiver Transmitter, engl.), NRZ (Non Return to Zero codes; engl.); LIN-Bus (LIN = Local Interconnect Network; engl.), PWM (Pulse Width Modulation; engl.).

Die Übertragung des Temperaturwertes kann durch einen Prüfwert (z.B. Prüfsumme, CRC) abgesichert werden.

Erfindungsgemäß wird der Temperatursensor 100 außerdem über eine Verschaltung mit weiteren Bauelementen einer Sensorvorrichtung (nicht gezeigt) verbunden.

Eine derartige Sensorvorrichtung umfasst beispielsweise als weitere Bauelemente Mittel zur elektromagnetischen Verträglichkeit (EMV), die beispielsweise eine Abschirmung für elektromagnetische Störsignale oder einen Massekontakt aufweisen können. Außerdem können die weiteren Bauelemente Komponenten einer Spannungsstabilisierung oder für eine Schutzbeschaltung umfassen, die ebenfalls Teil der Sensorvorrichtung sein können. Diese weiteren Bauelemente können beispielsweise über eine Platine (PCB = printed circuit board, Leiterplatte) oder ein Stanzgitter (ein sogenanntes Lead Frame) miteinander verbunden sein.

Wie bereits dargelegt, besteht ein besonderer Vorteil von Ausführungsbeispielen darin, dass der Temperatursensor 100 aufbereitete Signale ausgibt, die direkt (z.B. über Fahrzeugbus) an andere Fahrzeugkomponenten, beispielweise als digitales Signal an die Getriebesteuerung 200, weitergeleitet werden können.

### BEZUGSZEICHENLISTE

- 100: Temperatursensor
- 110: Sensoreinheit
- 120: Auswerteeinheit
- 130: Datenschnittstelle
- 140: Gehäuse
- 150: Dichtelement
- 160: Befestigungsmittel
- 200: Getriebesteuerung

## Patentansprüche

1. Temperatursensor (100) für ein Schaltgetriebe, wobei das Schaltgetriebe in einem Innenraum teilweise mit Öl befüllbar ist, wobei der Temperatursensor Folgendes aufweist:
- ein Sensorelement (110) zum Erfassen eines Sensorsignals, das von der Temperatur in dem Innenraum abhängt;
- eine Auswerteeinheit (120) zum Auswerten des erfassten Sensorsignals;
- eine Datenschnittstelle (130) zum Bereitstellen des ausgewerteten Sensorsignals; und
- ein Gehäuse (140), in dem das Sensorelement (110), die Auswerteeinheit (120) und die Datenschnittstelle (130) integriert sind und das ausgebildet ist, um zumindest das Sensorelement (110) in thermischen Kontakt zu dem Innenraum des Schaltgetriebes zu platzieren;
wobei
die Auswerteeinheit (120) ausgebildet ist, um basierend auf einer Kalibrierung das erfasste Sensorsignal in ein Temperatursignal umzuwandeln,
**dadurch gekennzeichnet, dass**
das Sensorelement (110) ein Material mit einem negativen Temperaturkoeffizienten aufweist und ein Stanzgitter zum Verschalten des Temperatursensors mit weiteren
Bauelementen vorgesehen ist, und
wobei die Auswerteeinheit (120) ausgebildet ist, um einen Fehler zu detektieren wenn bei einer Betriebstemperatur das Sensorelement (110) wider Erwarten einen hohen Widerstandswert aufweist.

2. Temperatursensor (100) nach Anspruch 1,
**dadurch gekennzeichnet, dass**
die Auswerteeinheit (120) ausgebildet ist, um das erfasste Sensorsignal in ein digitales Messsignal umzuwandeln und die Datenschnittstelle (130) ausgebildet ist, um das digitale Messsignal auszugeben.

3. Temperatursensor (100) nach Anspruch 1 oder Anspruch 2,
**gekennzeichnet durch**
einen Datenspeicher zum Speichern und Bereitstellen von Kalibrierungsdaten.

4. Temperatursensor (100) nach einem der vorhergehenden Ansprüche,
**gekennzeichnet durch**
- zumindest ein Dichtelement (150), das ausgebildet ist, um eine Dichtung für Öl des Schaltgetriebes bereitzustellen; und
- Befestigungsmittel (160), um den Temperatursensor in thermischen Kontakt zu dem Innenraum des Schaltgetriebes zu befestigen.

5. Temperatursensor (100) nach einem der vorhergehenden Ansprüche,
**dadurch gekennzeichnet, dass**
die Datenschnittstelle (130) ausgebildet ist, um direkt an einen Fahrzeugbus oder direkt an eine Getriebesteuerung eines
Nutzfahrzeuges zu koppeln oder das ausgewertete Sensorsignal drahtlos an eine Steuereinheit des Nutzfahrzeuges zu übertragen.

6. Sensorvorrichtung für ein Schaltgetriebe eines Nutzfahrzeuges,
**gekennzeichnet durch**
einen Temperatursensor (100) nach einem der vorhergehenden Ansprüche.

7. Sensorvorrichtung nach Anspruch 6
**dadurch gekennzeichnet, dass**
die weiteren Bauelemente zumindest eines der folgenden Elemente umfassen: eine Einrichtung zur elektromagnetischen Verträglichkeit (EMV), eine Spannungsstabilisierungseinrichtung, eine Schutzbeschaltung, eine weitere Steuereinheit.

8. Schaltgetriebe für ein Nutzfahrzeug
**gekennzeichnet durch** eine Sensorvorrichtung nach einem der Ansprüche 6 oder 7 oder einen Temperatursensor (100) nach einem der Ansprüche 1 bis 5.

9. Nutzfahrzeug
**gekennzeichnet durch**
ein Schaltgetriebe nach Anspruch 8 oder einen Temperatursensor (100) nach einem der Ansprüche 1 bis 5.

## Claims

1. A temperature sensor (100) for a gearbox, it being possible to partially fill an inner chamber of the gearbox with oil, the temperature sensor comprising the following:
- a sensor element (110) for detecting a sensor signal that is dependent on the temperature in the inner chamber;
- an evaluation device (120) for evaluating the detected sensor signal;
- a data interface (130) for supplying the evaluated sensor signal; and
- a housing (140) in which the sensor element (110), the evaluation unit (120) and the data interface (130) are integrated and that is configured to place at least the sensor element (110) in thermal contact with the inner chamber of the gearbox;
the evaluation unit (120) being configured to convert the detected sensor signal into a temperature signals based on a calibration,
**characterised in that**
the sensor element (110) is made of a material having a negative temperature coefficient, and a lead frame is provided for wiring the temperature sensor up to further components, and the evaluation unit (120) being configured to detect an error if, against expectation, the sensor element (110) has a high resistance value at an operating temperature.

2. A temperature sensor (100) according to claim 1,
**characterised in that**
the evaluation unit (120) is configured to convert the detected sensor signal into a digital measurement signal, and the data interface (130) is configured to emit the digital measurement signal.

3. A temperature sensor (100) according to claim 1 or claim 2,
**characterised by**
a data storage device for storing and supplying calibration data.

4. A temperature sensor (100) according to any one of the preceding claims, **characterised by**
- at least one sealing element (150) that is configured to provide a seal for oil of the gearbox; and
- fastening means (160) to fasten the temperature sensor in thermal contact with the inner chamber of the gearbox.

5. A temperature sensor (100) according to any one of the preceding claims,
**characterised in that**
the data interface (130) is configured to couple directly to a vehicle bus or directly to a gearbox controller of a utility vehicle or to transmit the evaluated sensor signal wirelessly to a control unit of the utility vehicle.

6. A sensor device for a gearbox of a utility vehicle compressor system,
**characterised by**
a temperature sensor (100) according to any one of the preceding claims.

7. A sensor device according to claim 6,
**characterised in that**
the further components comprise at least one of the following elements: an electromagnetic compatibility (EMC) device, a voltage stabilisation device, a suppressor circuit and a further control unit.

8. A gearbox for a utility vehicle,
**characterised by**
a sensor device according to either of claims 6 or 7, or a temperature sensor (100) according to any one of claims 1 to 5.

9. A utility vehicle,
**characterised by**
a gearbox according to claim 8 or a temperature sensor (100) according to any one of claims 1 to 5.

## Revendications

1. Capteur (100) de température pour une boite de vitesses, la boîte de vitesses pouvant être partiellement remplie d'huile dans un espace intérieur, le capteur de température comportant :
- un élément (110) de détection pour détecter un signal de détection qui dépend de la température dans l'espace intérieur ;
- une unité d'exploitation (120) pour exploiter le signal de capteur détecté ;
- une interface de données (130) pour mettre à disposition le signal de capteur exploité ; et
- un boîtier (140) dans lequel l'élément (110) de détection, l'unité (120) d'exploitation et l'interface de données (130) sont intégrés et qui est conçu pour placer au moins l'élément (110) de détection en contact thermique avec l'espace intérieur de la boîte de vitesses ;
dans lequel
l'unité d'exploitation (120) est conçue pour convertir le signal de capteur détecté en un signal de température sur la base d'un étalonnage,
**caractérisé en ce que**
l'élément (110) de détection comporte un matériau ayant un coefficient de température négatif et une grille estampée est prévue pour le couplage du capteur de température avec d'autres composants, et
l'unité d'exploitation (120) est conçue pour détecter une erreur lorsque, à une température de fonctionnement, l'élément (110) de détection présente contre toute attente une valeur de résistance élevée.

2. Capteur (100) de température selon la revendication 1,
**caractérisé en ce que**
l'unité (120) d'exploitation est conçue pour convertir le signal de capteur détecté en un signal numérique de mesure, et l'interface de données (130) est conçue pour délivrer le signal numérique de mesure.

3. Capteur (100) de température selon la revendication 1 ou la revendication 2,
**caractérisé par**
une mémoire de données pour mettre en mémoire et mettre à disposition des données d'étalonnage.

4. Capteur (100) de température selon l'une des revendications précédentes,
**caractérisé par**
- au moins un élément d'étanchéité (150) configuré pour mettre à disposition une étanchéité pour l'huile de la boîte de vitesses ; et
- des moyens (160) de fixation pour fixer le capteur de
température en contact thermique avec l'espace intérieur de la boîte de vitesses.

5. Capteur (100) de température selon l'une des revendications précédentes,
**caractérisé en ce que**
l'interface de données (130) est conçue pour être couplée directement à un bus de véhicule ou directement à une commande de boîte de vitesses d'un véhicule utilitaire ou pour transmettre sans fil le signal de capteur exploité à une unité de commande du véhicule utilitaire.

6. Dispositif de détection pour une boîte de vitesse d'un véhicule utilitaire,
**caractérisé par**
un capteur (100) de température selon l'une des revendications précédentes.

7. Dispositif de détection selon la revendication 6,
**caractérisé en ce que**
les autres composants comprennent au moins l'un des éléments suivants: un dispositif de compatibilité électromagnétique (CEM), un dispositif de stabilisation de la tension, un circuit de protection, une autre unité de commande.

8. Boîte de vitesses pour un véhicule utilitaire
**caractérisé par**
un dispositif de détection selon l'une des revendications 6 ou 7 ou un capteur (100) de température selon l'une des revendications 1 à 5.

9. Véhicule utilitaire
**caractérisé par**
une boîte de vitesses selon la revendication 8 ou un capteur (100) de température selon l'une des revendications 1 à 5.
